# EUROPEAN PATENT APPLICATION

(11) **EP 4 687 329 A1**
(43) Date of publication of application: **04.02.2026**
(21) Application number: 24306312.0
(22) Date of filing: 02.08.2024
(51) Int. Cl.: H04L 41/0806, H04L 41/08, H04L 41/12

(54) **SYSTEMS AND METHODS FOR BUILDING AND MODIFYING A NETWORK BORDER**

(71) Applicant: OVH, 59100 Roubaix (FR)
(72) Inventor: DECLERFAYT, Louis, 59170 Croix (FR); ROLLAND, Léo, 35510 Cesson-Sévigné (FR); TULA, Patricio, 29280 Plouzané (FR)
(74) Representative: BCF Global

(57) **Abstract**

There is disclosed a method and system for configuring a border of a network. A request to create the border is received. A border topology most closely matching the request is identified. The border is created with a locked state. A request is received to configure a device for the border. A configuration and cabling plan is generated for the device. The configuration and cabling plan are applied to the device. A request is received to add a link to the border. Available ports are reserved for the link. The configurations of the devices forming the border are updated to reflect the added link.

## Description

### FIELD

The present technology relates to systems and methods for configuring a network border for a network of computer systems.

### BACKGROUND

Servers in a data center need to communicate with other servers within and outside of the data center. In order to allow the servers to communicate with the other servers in the same data center, various networking devices in the data center, such as switches, routers, firewalls etc. are configured to provide a datacenter network (such as a fabric) that manages this traffic between servers. In order to allow the servers to communicate with the other servers in other data centers, various networking devices, such as switches, routers, firewalls etc. are configured to provide a border network that manages this traffic between data centers and the internet.

Creating a border may be a difficult and time-consuming process. Designing the border, configuring the devices, reserving the appropriate resources, and attaching the proper cables to the devices can be time-consuming. Additionally, when these processes are done manually, errors often occur when devices are configured incorrectly, or cables are placed incorrectly. It might also be difficult to keep track of the configuration of each networking device, or to adjust the border if network usage changes. It is an object of the present technology to ameliorate at least some of the limitations present in the prior art.

### SUMMARY

According to a first broad aspect of the present technology, there is provided a method for configuring a border of a network, the method comprising: receiving a request to create the border, wherein the request comprises a size of the border and a location of the border; searching a plurality of border topologies for a border topology most closely matching the request; creating the border with a locked state; reserving address ranges for the border; and outputting a topology of the border.

In some implementations of the method, the method further comprises: receiving a request indicating a device to configure for the border; reserving addresses for the device, wherein the addresses are within the address ranges; generating a configuration for the device; creating a cabling plan for the device; applying the configuration to the device; and de-isolating the device.

In some implementations of the method, the method further comprises after applying the configuration to the device, confirming that the device has been configured according to the configuration.

In some implementations of the method, the method further comprises: validating the request indicating the device to configure for the border; and if the request fails the validation, outputting an indication that the request has failed validation.

In some implementations of the method, the method further comprises: receiving a request to add a north link to the border, wherein the request comprises a target throughput; reserving available ports until the target throughput is reached; reserving addresses for the north link, wherein the addresses are within the address ranges; creating a cabling plan for the north link; updating a configuration of devices forming the border to include the north link; and unlocking the border after the cabling plan has been applied and the devices have been reconfigured to include the north link, wherein the border accepts client traffic after being unlocked.

In some implementations of the method, the method further comprises: receiving a request to add a south link to the border, wherein the request comprises a target throughput; reserving available ports until the target throughput is reached; reserving addresses for the south link, wherein the addresses are within the address ranges; creating a cabling plan for the south link; updating a configuration of devices forming the border to include the south link; and unlocking the border after the cabling plan has been applied and the devices have been reconfigured to include the south link, wherein the border accepts client traffic after being unlocked.

In some implementations of the method, the method further comprises: validating the request to create the border; and if the request fails the validation, outputting an indication that the request has failed validation.

In some implementations of the method, reserving the address ranges for the border comprises: reserving internal link address ranges; reserving loopback parent address ranges; and reserving south parent address ranges.

In some implementations of the method, the topology indicates what type of devices are to be used to implement the border, and an amount of each type of device.

In some implementations of the method, the method further comprises outputting a user interface corresponding to the cabling plan.

In some implementations of the method, the method further comprises after detecting that a cable has been connected according to the cabling plan, updating the user interface to remove the instruction corresponding to that cable.

In some implementations of the method, the method further comprises: monitoring traffic on north links of the border; comparing the traffic to a threshold volume of traffic; and after determining that the traffic is above the threshold, adding a north link to the border.

In some implementations of the method, the method further comprises: monitoring traffic on south links of the border; comparing the traffic to a threshold volume of traffic; and after determining that the traffic is above the threshold, adding a south link to the border.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a block diagram of an example computing environment in accordance with various embodiments of the present technology;
Figure 2 is a block diagram of devices and networks in accordance with various embodiments of the present technology;
Figure 3 is a block diagram of a system for configuring a network border in accordance with various embodiments of the present technology;
Figures 4 and 5 are a flow diagram of a method for creating a network border in accordance with various embodiments of the present technology;
Figures 6 and 7 are a flow diagram of a method for configuring a device for the network border in accordance with various embodiments of the present technology;
Figures 8 and 9 are a flow diagram of a method for adding a north or south link to the network border in accordance with various embodiments of the present technology;
Figure 10 is a flow diagram of a method for removing a north or south link from the network border in accordance with various embodiments of the present technology; and
Figures 11 and 12 are a flow diagram of a method for adapting a network border in accordance with various embodiments of the present technology.
It should be noted that, unless otherwise explicitly specified herein, the drawings are not to scale.

### DETAILED DESCRIPTION

Devices in a data center, such as servers, may be connected to a network organized into a cell or multiple cells and having a border. The border may allow a device within the border to communicate with other devices outside of a data center in which it is located via an internet backbone, may allow the devices to communicate with other devices within the same data center via an internal data center network, such as a data center fabric, and/or may allow the device to directly communicate with other devices within the border but in different data centers. The border may span a single data center or multiple data centers.

A border may be configured to manage communications between devices within the border and/or external communications outside of the border. The border may manage the distribution of packets within the border and/or to and from outside of the border. The border may be formed using various networking devices, such as routers, switches, firewalls, and/or other networking devices. These networking devices may be configured to deploy the border.

Traditionally, in order to configure the networking devices, a border must first be manually designed based on specifications received from a client. Then, each networking device of the border must be manually configured and cabled according to the design and resources for the devices and the border resources must be booked in various systems. This process can be time consuming and can lead to human errors in the configuration, cabling, or resource booking. After a border is activated, it can be time consuming and difficult to reconfigure the border if the client's needs change, as a new design must be generated and then the networking devices must be reconfigured and re-cabled. Because of these difficulties, a border is traditionally considered relatively static after the border is deployed.

Rather than creating a static border, it would be more efficient to dynamically reconfigure a border based on client requests, historical data regarding traffic of the border, and/or current traffic of the border. In this manner, the border could be resized so that hardware and/or other resources that are reserved for the border are released during periods of low traffic.

A usage of the border may be predicted and/or measured, and the border may be resized based on the usage. For example, if a particular link associated with a border is receiving heavy traffic, that link may be reconfigured, or additional links may be added to the border, to increase throughput to the border to ensure that the border can handle the heavy traffic. In another example, if a network has a border with a large capacity, but is receiving little traffic, the border may be resized to use less networking devices because traffic is low and to decrease throughput. By modifying the size of the border based on predicted or actual usage, hardware and/or other resources within a data center may be allocated more efficiently.

When a border is manually configured, it is not possible to resize a border to respond to usage as this configuration process is too slow. In the amount of time that it would take to manually reconfigure a border, traffic patterns would likely change. Described herein are methods and systems for automatic configuration of a border. These methods and systems can allow a border to be quickly configured and reconfigured, so that the border can be adjusted based on predicted or actual traffic. Traffic patterns can be analyzed over extended periods of time, to detect that network usage is increasing or decreasing. If an increase or decrease in network usage is detected over an extended time period, various aspects of the border can be modified, such as by increasing or decreasing throughput of the border's links.

The methods and systems herein can also provide a more efficient design for a border. Rather than manually designing a border for each network, a border design can be generated based on various parameters of the network. Because the border that is deployed will be more tailored to the needs of the network, networking devices can be allocated more efficiently. Because of the design of the border and/or dynamic reconfiguration of the border, packets may traverse less networking devices when being routed by the border, allowing the packets to travel to and from devices within the network more quickly.

Networking devices can be costly and/or difficult to obtain. In some instances network devices or other resources that are not yet needed may be reserved for a border so that the border has additional capacity to expand in the future. Using the methods described herein a border can be deployed with a relatively small number of devices and then, as network usage increases, network devices can be added to the border. Costs can be decreased by optimizing the amount of network devices used, rather than overbooking network devices and resources so that the border has more capacity than currently needed. The amount of network devices and/or other hardware within a data center may be reduced using the methods described herein.

Human errors are often made when manually configuring and deploying a border. For example, errors may be made during device configuration, resource booking, and/or cabling. The methods described herein can reduce or remove the possibility of any human errors being made during deployment of a border.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and/or implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general purpose processor, such as a central processing unit (CPU) or a processor dedicated to a specific purpose, such as a digital signal processor (DSP) or quantum processing unit (QPU). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof.

In the context of the present specification, unless expressly provided otherwise, a computer system may refer, but is not limited to, an "electronic device," an "operation system," a "system," a "computer-based system," a "controller unit," a "monitoring device," a "control device," and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first," "second," "third," etc. have been used as adjectives only for the purpose of allowing for distinction between the nouns that they modify from one another, and not for the purpose of describing any particular relationship between those nouns.

With these fundamentals in place, we will now consider some non-limiting examples of the present technology.

### COMPUTING ENVIRONMENT

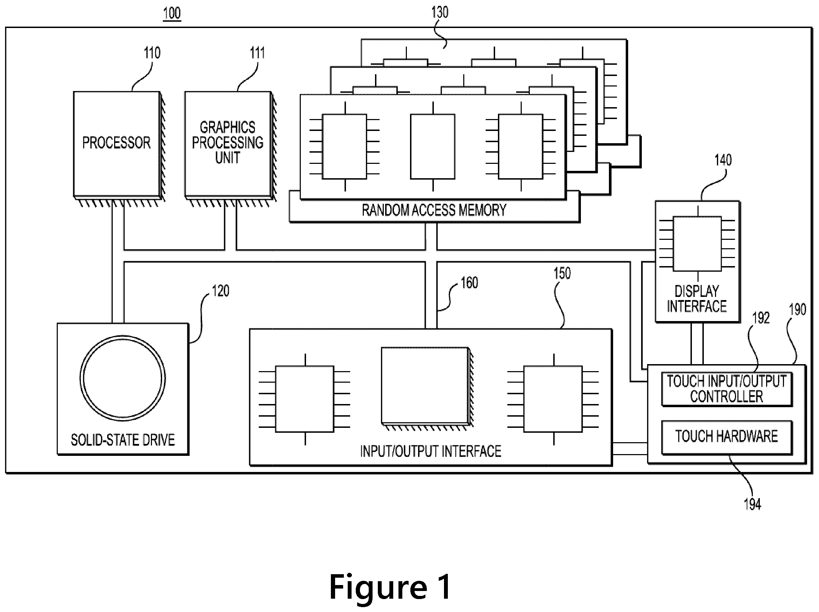

Figure 1 illustrates a computing environment 100, which may be used to implement and/or execute any of the methods described herein. In some embodiments, the computing environment 100 may be implemented by any of a conventional personal computer, a network device, and/or an electronic device (such as, but not limited to, a mobile device, a tablet device, a server, a controller unit, a control device, etc.), and/or any combination thereof appropriate to the relevant task at hand.

In some embodiments, the computing environment 100 comprises various hardware components including one or more single or multi-core processors collectively represented by processor 110, a solid-state drive 120, a random access memory 130, and an input/output interface 150. The computing environment 100 may be a computer specifically designed to operate a machine learning algorithm (MLA). The computing environment 100 may be a generic computer system.

In some embodiments, the computing environment 100 may also be a subsystem of one of the above-listed systems. In some other embodiments, the computing environment 100 may be an "off-the-shelf' generic computer system. In some embodiments, the computing environment 100 may also be distributed amongst multiple systems. The computing environment 100 may also be specifically dedicated to the implementation of the present technology. As a person in the art of the present technology may appreciate, multiple variations as to how the computing environment 100 is implemented may be envisioned without departing from the scope of the present technology.

Those skilled in the art will appreciate that processor 110 is generally representative of a processing capability. In some embodiments, in place of or in addition to one or more conventional Central Processing Units (CPUs), one or more specialized processing cores may be provided. For example, one or more Graphic Processing Units 111 (GPUs), Quantum Processing Units (QPUs), Tensor Processing Units (TPUs), and/or other so-called accelerated processors (or processing accelerators) may be provided in addition to or in place of one or more CPUs.

System memory will typically include random access memory 130, but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 120 is shown as an example of a mass storage device, but more generally such mass storage may comprise any type of non-transitory storage device configured to store data, programs, and other information, and to make the data, programs, and other information accessible via a system bus 160. For example, mass storage may comprise one or more of a solid state drive, hard disk drive, a magnetic disk drive, and/or an optical disk drive.

Communication between the various components of the computing environment 100 may be enabled by a system bus 160 comprising one or more internal and/or external buses (e.g., a PCI bus, universal serial bus, IEEE 1394 "Firewire" bus, SCSIbus, Serial-ATA bus, ARINC bus, etc.), to which the various hardware components are electronically coupled.

The input/output interface 150 may enable networking capabilities such as wired or wireless network communications. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example the networking interface may implement specific physical layer and data link layer standards such as Ethernet, Fibre Channel, Wi-Fi, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 150 may be coupled to a touchscreen 190 and/or to the one or more internal and/or external buses 160. The touchscreen 190 may be part of the display. In some embodiments, the touchscreen 190 is the display. The touchscreen 190 may equally be referred to as a screen 190. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the one or more internal and/or external buses 160. In some embodiments, the input/output interface 150 may be connected to a keyboard (not shown), a mouse (not shown) or a trackpad (not shown) allowing the user to interact with the computing environment 100 in addition to or instead of the touchscreen 190.

According to some implementations of the present technology, the solid-state drive 120 stores program instructions suitable for being loaded into the random access memory 130 and executed by the processor 110 for executing acts of one or more methods described herein. For example, at least some of the program instructions may be part of a library or an application.

The computing environment 100 may include any number of the illustrated components, which may be integrated in any number of physical devices. The computing environment 100 may be implemented as a cloud environment and/or a distributed architecture. The computing environment 100 may include multiple servers, which may be in different physical locations and/or on different networks. The computing environment 100 may include virtualized systems. The methods described herein, or any parts of the methods described herein, may be executed on multiple systems as distributed applications.

### NETWORK BORDER

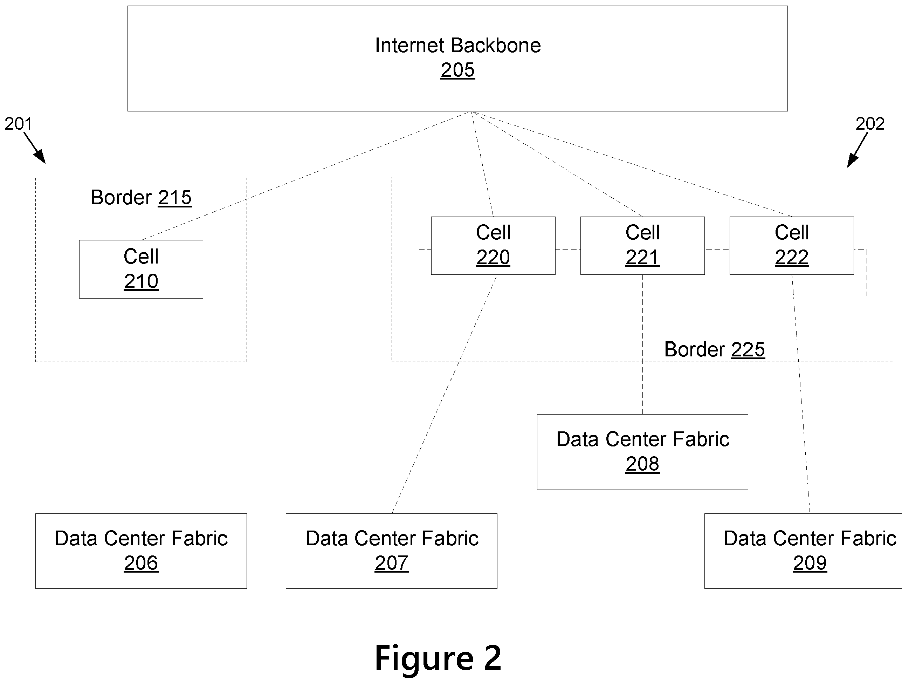

Figure 2 is a block diagram of devices and networks in accordance with various embodiments of the present technology. Figure 2 illustrates two networks, a network 201 and a network 202. The network 201 includes a single cell 210. The cell 210 may include various servers and/or other devices. The network 202 includes a cell 220, cell 221, and cell 222. The cells 210, 220, 221, and 222 may be in different data centers. The data centers containing cells 220, 221, and 222 may be in a same geographic area, such as within France. The data center containing cell 210 may be in a different geographic area, such as in Japan.

The devices within the cells 210, 220, 221, and 222 may be in communication with other devices on the internet via the internet backbone 205. The internet backbone 205 may be used to transmit packets to and/or receive packets from other devices connected to the internet.

The devices within the cell 210 may be in communication with other devices within the same data center via a data center fabric 206. Similarly, the devices in the cells 220, 221, and 222 may be in communication with other devices within the same data center via the data center fabrics 207, 208, and 209, respectively. The data center fabrics 206, 207, 208, and 209 may provide connectivity between devices within a same data center. The data center fabrics 206, 207, 208, and 209 may include various networking devices, such as routers, switches, etc. Each data center may have its own data center fabric.

The border 215 may manage communications between devices within the cell 210 and the internet backbone 205 and/or the data center fabric 206. A packet may be forwarded from a device within the cell 210 and directed to a device that is external to the network 201. The border 215 may route the packet to either the internet backbone 205 if the packet is directed to a device outside of the data center, or to the data center fabric 206 if the packet is directed to a device within the data center. Similarly, the border 215 may route a packet that is received from the internet backbone 205 or data center fabric 206 to a device in the cell 210. The link to the internet backbone 205 may be referred to as a north link, and the link to the data center fabric 206 may be referred to as a south link. Like the border 215, the border 225 may route packets from the cells 220, 221, and 222 that are directed to a device within the same data center to the data center fabrics 207, 208, and/or 209. The border 225 may route packets from the cells 220, 221, and 222 that are directed to a device outside of the data center to the internet backbone 205.

Because the data center of cells 220, 221, and 222 are within a same geographic area, networking devices within the different cells 220, 221, and 222 may be able to communicate directly with each other without packets exiting the border. A device in cell 221 may communicate directly with cell 222 without leaving the border 225, even though the cell 221 and the cell 222 may be in different data centers. The data centers housing cells 220, 221, and/or 222 may have direct links to each other so that packets can be transmitted to the different cells within the border 225.

### BORDER CONFIGURATION SYSTEM

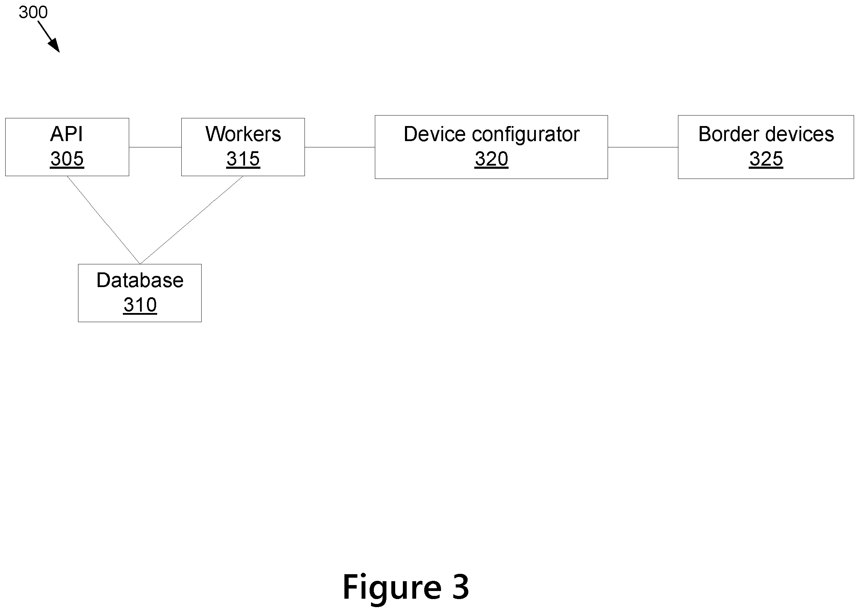

Figure 3 is a block diagram of a system 300 for configuring a network border in accordance with various embodiments of the present technology. The system 300 illustrates an exemplary arrangement of systems for configuring a border, but other arrangements and/or other systems may be used for configuring a border according to the methods described herein.

An application programming interface (API) 305 may be defined for configuring and managing the border. The API 305 may receive and/or provide data regarding a border. The API 305 may receive a request to create a border and/or reconfigure a border. The request may include parameters defining various aspects of the border, such as a name of the border, a size of the border, a geographic zone corresponding to the border, an identifier of a border gateway protocol (BGP) community of the zone, an identifier of a BGP community of the border, and/or an identifier of cells corresponding to the border. The API 305 may receive a request regarding a device to configure for a border. The API 305 may receive a request to add a north or south link to the border, remove a north or south link from the border, and/or modify an existing north or south link.

After receiving a command, the API 305 may generate and/or execute various workers 315 to perform tasks to configure a border. The API 305 and/or workers 315 may have access to a database 310, which may contain information about the border and/or devices within the border.

The database 310 may contain a configuration for each networking device used to deploy the border. The database 310 may contain information about all networking devices within a cell, a data center, and/or multiple data centers. The information about each device may include a type of the device, a version of the device, a manufacturer of the device, a current configuration of the device, networks associated with the device, a location of the device, and/or any other information about the device. The database may contain information about resources that have been reserved for the border, such as address ranges that have been reserved for the border.

The workers 315 may deploy the border by configuring various border devices 325. The border devices 325 may include networking devices and/or any other type of devices. In order to configure the border devices 325, the workers 315 may transmit the configuration for a device to the device configurator 320. A worker 315 may send a configuration and an identification of the device to be configured to the device configurator 320. The device configurator 320 may then apply the configuration to the device of the border devices 325. After applying a configuration to one of the border devices 325, the device configurator 320 may notify a worker 315 that the configuration has been applied, and the worker 315 may updated the database 310 to indicate the current configuration of the border device 325.

### METHOD FOR DEPLOYING A BORDER

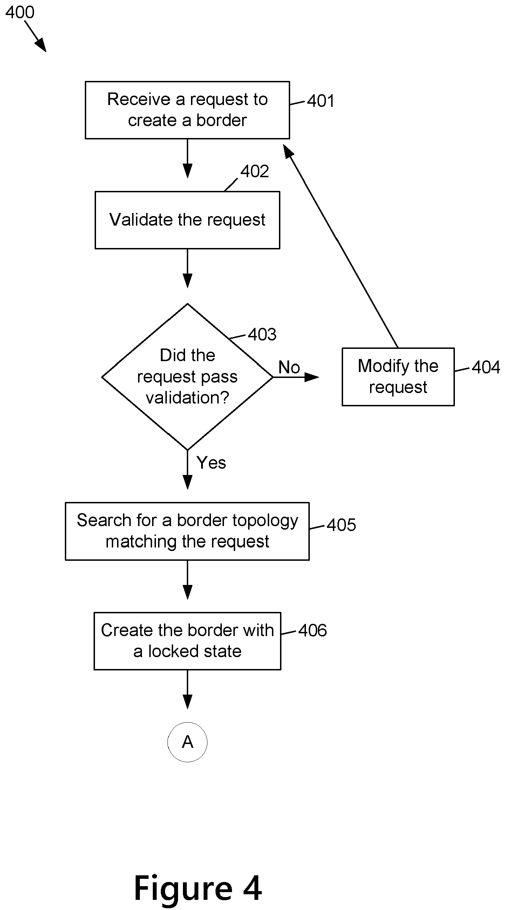

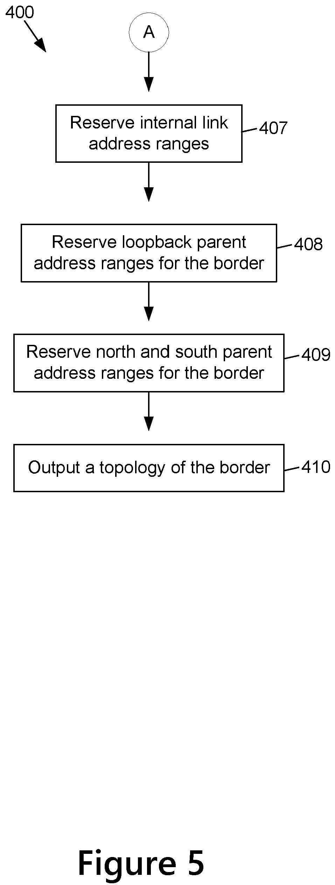

Figures 4 and 5 are a flow diagram of a method 400 for creating a network border in accordance with various embodiments of the present technology. In one or more aspects, the method 400 or one or more steps thereof may be performed by a computing system, such as the computing environment 100. In one or more aspects, the method 400 or one or more steps thereof may be performed by the system 300 for configuring a network border. The method 400 or one or more steps thereof may be embodied in computer-executable instructions that are stored in a computer-readable medium, such as a non-transitory mass storage device, loaded into memory and executed by a CPU. The method 400 is exemplary, and it should be understood that some steps or portions of steps in the flow diagram may be omitted and/or changed in order.

At step 401 a request may be received to create a border. The request may be received via an API, such as the API 305. The request may include various parameters describing the border to be created. The parameters may include a size of the border and/or a location of the border. The parameters may include a name of the border, which may be in any suitable format for identifying the border.

The parameters may include a topology of the border. A set of border topologies may be predefined, with each topology having different border interconnected devices. The topology may specify the amount and/or types of devices. The topology may specify how those devices are interconnected. Different topologies will have different attributes because of the differences in the devices within the topology and how they are interconnected. These attributes may include different volume of connectivity, different volume of throughput, and/or other parameters. The request may indicate which predefined topology is to be used for generating the border.

In addition to and/or instead of specifying a predefined topology, the request may include various attributes for the border, such as a minimum connectivity for the border, minimum throughput for the border, minimum amount of ports for the border, and/or any other configurable elements of a border. The request may include a minimum, maximum, range, and/or other information for each configurable element of the border.

The parameters received with the request may include a zone of the border. The zone may be a geographic zone, such as a continent on which the border is to be located. The parameters may include a BGP community of the zone and/or a BGP community of the border. The parameters may include an identifier of one or more cells to be included within the border. The cells may include servers and/or other devices. The identifier of each cell may include a building or physical location corresponding to the cell and/or a name of the cell or other identifier corresponding to the cell.

At step 402 the request may be validated. The request may be validated to ensure that it is possible to configure a border corresponding to the request. If the request includes parameters that are incompatible with each other, would use resources that are unavailable, is incompatible with an already existing border, and/or otherwise cannot be deployed, the request may fail the validation. If the request fails validation at step 403, an interface may be output and/or response may be sent indicating why the request failed validation. After failing validation, the request received at step 401 may be refused. Pre-defined rules may be applied to the request at step 402. If the request fails any of the pre-defined rules, an interface may be output indicating which of the pre-defined rules were failed.

User input may be requested to modify the request received at step 401. The request may then be modified at step 404, and the modified request may then be validated again at step 402. The original request may be discarded after failing validation at step 402, and a new request may be submitted at step 404.

After passing validation at step 403, a border topology corresponding to the request may be identified at step 405. If the request included attributes of the border, a predefined topology that satisfies those attributes may be identified and/or retrieved at step 405. The predefined topologies may be searched to identify a border topology that most closely matches the request. If the request received at step 401 identified a pre-defined topology, that pre-defined topology may be received at step 405. The pre-defined topology may be modified based on parameters received in the request at step 401, such as based on a requested throughput of the network.

At step 406 the border may be created with a locked state. In the locked state, the border might not route any packets, until the state of the border is changed to unlocked. The state of the border may be stored in a database, such as the database 310.

At step 407 internal link address ranges may be reserved. The internal links may be used for connections between devices within the border. Any suitable networking protocol may be used to reserve the internal link address ranges, such as Transmission Control Protocol/Internet Protocol (TCP/IP). The range may include a start address and an end address. The internal link address ranges may include public and/or private addresses.

At step 408 loopback parent address ranges for the border may be reserved. The loopback addresses may be IP addresses for which packets are processed locally by the border, rather than being transmitted to any other devices. The loopback addresses may be used to access and/or configure border devices. Any suitable networking protocol may be used to reserve the loopback parent address ranges, such as Transmission Control Protocol/Internet Protocol (TCP/IP). The range may include a start address and an end address. The loopback parent address ranges may be a complete network in the Classless Inter-Domain Routing (CIDR) format. The loopback parent address ranges may include public and/or private addresses.

At step 409 north and/or south parent address ranges for the border may be reserved. At step 409 south parent address ranges may be reserved, north parent address ranges may be reserved, and/or both north and south parent address ranges may be reserved. The south parent address ranges may be ranges of IP addresses for transmitting packets from within the border to outside of the border, such as for transmitting packets from a server within the network to the data center fabric. Any suitable networking protocol may be used to reserve the south parent address ranges, such as TCP/IP. The range may include a start address and an end address. The south parent address ranges may include public and/or private addresses.

The north parent address ranges may be ranges of IP addresses for transmitting packets from within the border to outside of the border, such as for transmitting packets from a server within the network to the internet backbone. Any suitable networking protocol may be used to reserve the north parent address ranges, such as TCP/IP. The range may include a start address and an end address. The north parent address ranges may include public and/or private addresses.

The addresses ranges booked at steps 407, 408, and 409 may include Internet Protocol version 4 (IPv4) and/or Internet Protocol version 6 (IPv6) addresses.

At step 410 a topology of the border may be output. The topology may include a description of network devices to be used for the border, the network address ranges booked at steps 407, 408, and 409, and/or any other information about the border. The topology may indicate what types of devices are to be used to implement the border, and an amount of each type of device. The topology may indicate characteristics of the devices to be used for the border, such as how many ports each device should have, the capabilities of each device, and/or any other information about the devices.

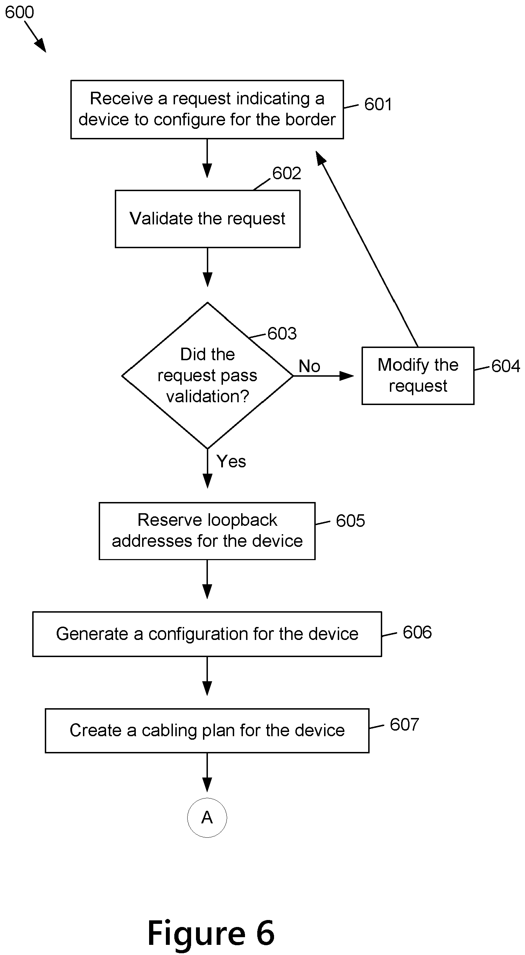

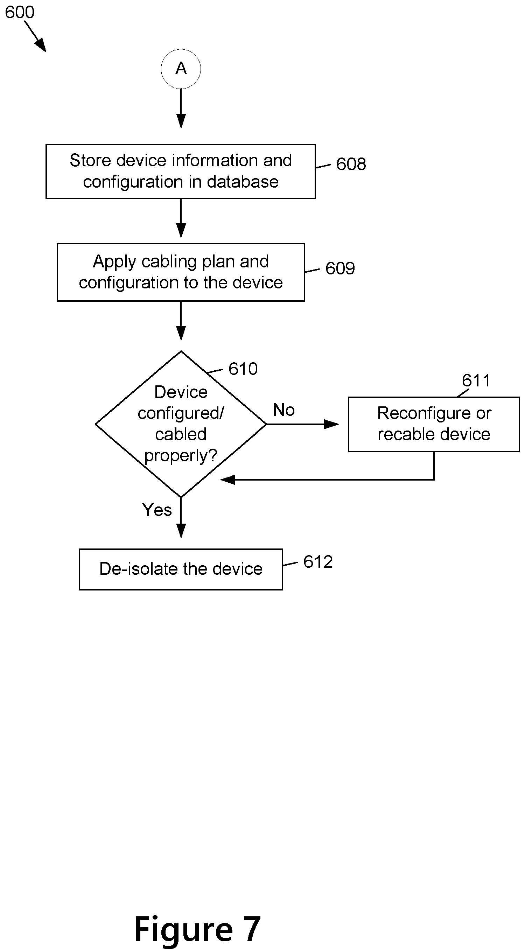

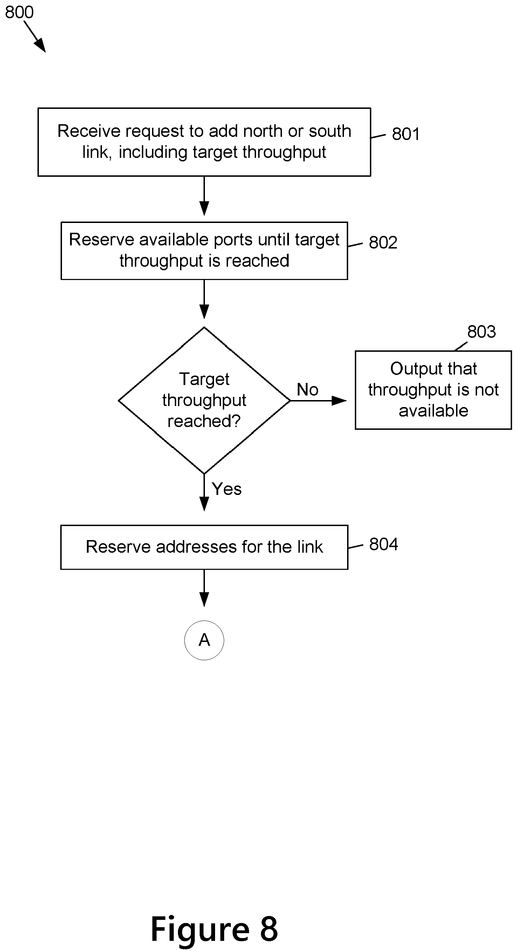

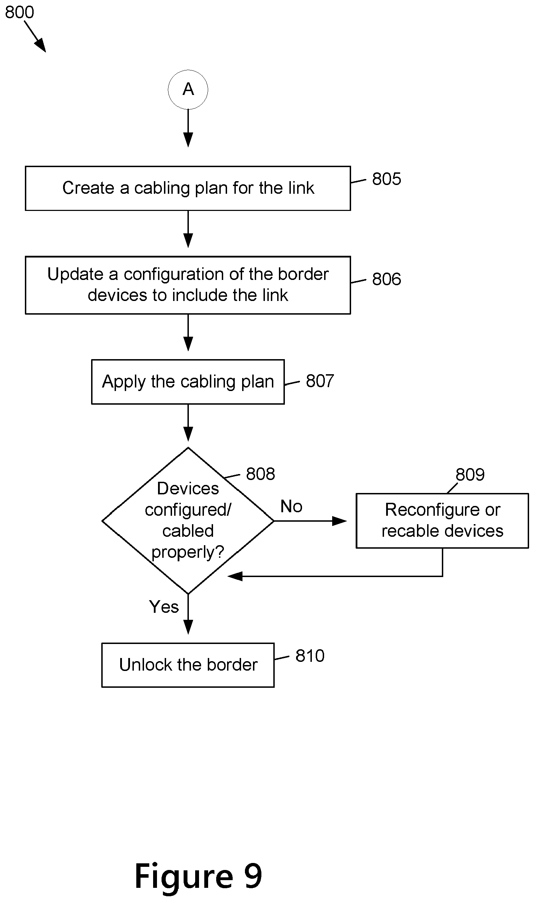

Using the method 400 a border can be created, address ranges may be reserved, and/or a border topology may be output. At the completion of the method 400 the border might not yet be active and/or usable. Method 600, described below and in figures 6 and 7, may be used to configure network devices for the border. Method 800, described below and in figure 8 and 9, may be used to add north or south links to the border. After the network devices have been configured using the method 600, and a north and south link have been added to the border using the method 800, they border may then be operational to route packets and/or set to an unlocked state.

### METHOD FOR CONFIGURING A DEVICE

Figures 6 and 7 are a flow diagram of a method 600 for configuring a device for the network border in accordance with various embodiments of the present technology. In one or more aspects, the method 600 or one or more steps thereof may be performed by a computing system, such as the computing environment 100. In one or more aspects, the method 600 or one or more steps thereof may be performed by the system 300 for configuring a network border. The method 600 or one or more steps thereof may be embodied in computer-executable instructions that are stored in a computer-readable medium, such as a non-transitory mass storage device, loaded into memory and executed by a CPU. The method 600 is exemplary, and it should be understood that some steps or portions of steps in the flow diagram may be omitted and/or changed in order.

At step 601 a request may be received indicating a device to configure for the border. The request may include an address of the device, an identification number of the device, a name of the device, a manufacturer of the device, a model number of the device, a hardware or software version of the device, and/or any other information identifying the device. The request may be received via an API, such as the API 305.

At step 602 the request may be validated. The request may be validated to ensure that it is possible to configure a device according to the request. Pre-defined rules may be applied to the request. If any of the pre-defined rules are not satisfied, the request may fail validation. An interface may be output indicating which pre-defined rules were failed. If the request fails validation at step 603, an interface may be output and/or response may be sent indicating why the request failed validation. After failing validation, the request received at step 601 may be refused.

User input may be requested to modify the request received at step 601. The request may then be modified at step 604, and the modified request may then be validated again at step 602. The request may be discarded after failing validation at step 602, and a new request may be submitted at step 604.

At step 605 loopback addresses may be reserved for the device identified in the request received at step 601. The loopback addresses may be within loopback parent address ranges reserved at step 408 of the method 400. The reserved loopback parent address ranges may be retrieved, such as from a database. The addresses reserved at step 605 may be IPv4 and/or IPv6 addresses. The loopback addresses may be IP addresses for which packets are directed back to the device corresponding to the loopback address, rather than being transmitted externally. Any suitable networking protocol may be used to reserve the loopback addresses, such as TCP/IP. The reserved addresses may be public IP addresses and/or private IP addresses.

At step 606 a configuration may be generated for the device. The configuration for the device may be determined based on a topology of the border and/or the input received at step 601. The configuration for a device may cause the device to route packets according to the topology. The configuration may incorporate the addresses reserved at step 605.

The configuration for the device may be generated by retrieving a current configuration of the device from a database or from the device itself. The current configuration may be compared to the topology in order to determine changes to be made to the configuration of the device in order to implement the topology. The device configuration may then be generated in order to apply the identified changes to the device.

At step 607 a cabling plan may be generated for the device. The cabling plan may indicate which cables should be connected to which ports of the device. The cabling plan may be determined based on the border topology identified at step 405 and the devices identified at step 409. The cabling plan may include a series of instructions indicating which cables to connect to which ports of the device and/or other devices in order to implement the border.

At step 608 the configuration, cabling plan, and/or other information about the device may be stored. The configuration, cabling plan, and/or other information about the device may be stored in a database, such as the database 310.

At step 609 the cabling plan and/or configuration may be applied to the device. The configuration that was generated at step 606 may be applied to the device. The configuration may be applied by a device configurator system, such as the device configurator 320. The cabling plan determined at step 607 may be implemented. Instructions may be generated for the cabling plan. The instructions may be displayed to a technician on a user interface. The interface may be dynamically updated as the technician makes the connections. After detecting that a cable has been connected according to the instructions, the instruction for that connection may be removed from the interface and/or an indication may be added to the interface to show that this connection has been completed and verified.

At step 610 the device may be analyzed to determine whether the device was properly configured and/or whether the cables were attached properly. The actual configuration of the device may be compared to an intended configuration stored in a database. The cabling may be verified by sending various test packets via the cables and determining whether those test packets are received at the correct ports of the device. These tests may be performed using various protocols, such as Link Layer Discovery Protocol (LLDP) or Cisco Discovery Protocol (CDP).

If the device is determined to be configured or cabled incorrectly, the method 600 may proceed to step 611. At step 611, the error in cabling or configuration may be identified and resolved. If the device is malfunctioning, a replacement device may be identified, configured, and cabled. If the error can be repaired, the device may be reconfigured or re-cabled to resolve the issue. An instruction may be output to a technician to resolve this issue. If the technician indicates that the issue cannot be resolved, a replacement device may be identified, configured, and cabled. Any changes made to the device may be stored in the database. After the issue has been resolved, the method 600 may proceed to step 610 where the device may be analyzed to confirm whether the device was properly configured and/or whether the cables were attached properly.

After the device is determined to be configured properly, the device may be de-isolated at step 612. After being de-isolated, the device may send and/or receive packets.

### METHOD FOR ADDING A LINK

Figures 8 and 9 are a flow diagram of a method 800 for adding a north or south link to the network border in accordance with various embodiments of the present technology. In one or more aspects, the method 800 or one or more steps thereof may be performed by a computing system, such as the computing environment 100. In one or more aspects, the method 800 or one or more steps thereof may be performed by the system 300 for configuring a network border. The method 800 or one or more steps thereof may be embodied in computer-executable instructions that are stored in a computer-readable medium, such as a non-transitory mass storage device, loaded into memory and executed by a CPU. The method 800 is exemplary, and it should be understood that some steps or portions of steps in the flow diagram may be omitted and/or changed in order.

At step 801 a request may be received to add a link to the border. The request may indicate whether it is for a north link or a south link. The request may include a target throughput for the link, which may be a minimum amount of throughput to be configured for the link. The request may include an indication of the border to add the link to. The request may include a target speed for the link. The request may be transmitted via an API, such as the API 305.

At step 802 ports may be reserved for the link to be added. Each port may be able to provide an amount of throughput. Ports may be reserved until the total throughput of the reserved ports meets or exceeds the target throughput received at step 801. The ports may be reserved by a greedy algorithm that reserves ports until the target throughput is satisfied.

It is possible that an insufficient amounts of ports are available to reach the target throughput. If all available ports have been booked, and the target throughput has not been reached, the method 800 may continue to step 803. At step 803 an output may be generated indicating that the target throughput is not available. The request received at step 801 may be denied and/or discarded.

If target throughput was reached at step 802, the method 800 may proceed to step 804. At step 804 addresses may be reserved for the link. The addresses may be within reserved address ranges, such as the south parent address ranges reserved at step 409 of the method 400.

At step 805 a cabling plan may be generated for the link. The cabling plan may indicate which cables should be connected to which ports of which devices. The cabling plan may include a series of instructions indicating which cables to connect to which ports of the devices in order to implement the border. The cabling plan may include instructions for using breakout cables, which are cables that have one port on one side, and two ports on the other side. A breakout cable may be used to connect two two-hundred gigabit ports to one four-hundred gigabit port, for example.

At step 806 the devices of the border may be identified and configured to access the link. A configuration may be generated for each of the identified devices. The configuration for the devices may allow the devices to access the link that is being added to the border.

The configuration for each device may be generated by retrieving a current configuration of the devices from a database, such as the database 310, or from the devices themselves. The current configuration of each device may be modified to include the link. The new configuration for each device may be stored in a database, such as the database 310. The new configurations may be applied to each of the devices. The configuration may be applied by a device configurator system, such as the device configurator 320.

At step 807 the cabling plan may be applied to the devices. Instructions may be generated for applying the cabling plan. The instructions may be displayed to a technician on a user interface. The interface may be dynamically updated as the technician makes the connections. After detecting that a cable has been connected according to the instructions, the instruction for that connection may be removed from the interface and/or an indication may be added to the interface to show that this connection has been completed and verified.

At step 808 each of the devices may be analyzed to determine whether that device was properly configured and/or whether the cables were attached to that device according to the cabling plan. The actual configuration of the device may be compared to an intended configuration stored in a database. The cabling may be verified by sending various test packets via the cables and determining whether those test packets are received at the correct ports of the device.

If any device is determined to be configured or cabled incorrectly, the method 800 may proceed to step 809. At step 809, the error in cabling or configuration may be identified and resolved. If the device is malfunctioning, a replacement device may be identified, configured, and cabled. If the error can be repaired, the device may be reconfigured or re-cabled to resolve the issue. An instruction may be output to a technician to resolve this issue. If the technician indicates that the issue cannot be resolved, a replacement device may be identified, configured, and cabled. Any changes made to the device may be stored in the database. After the issue has been resolved, the method 800 may proceed to step 808 where the device or devices that were found to be configured or cabled incorrectly may be analyzed to confirm whether the devices are now properly configured and/or whether the cables were attached properly.

After the devices are determined to be configured properly and cabled properly, the border may be unlocked at step 810. After being unlocked the border may include the added link.

### METHOD FOR REMOVING A LINK

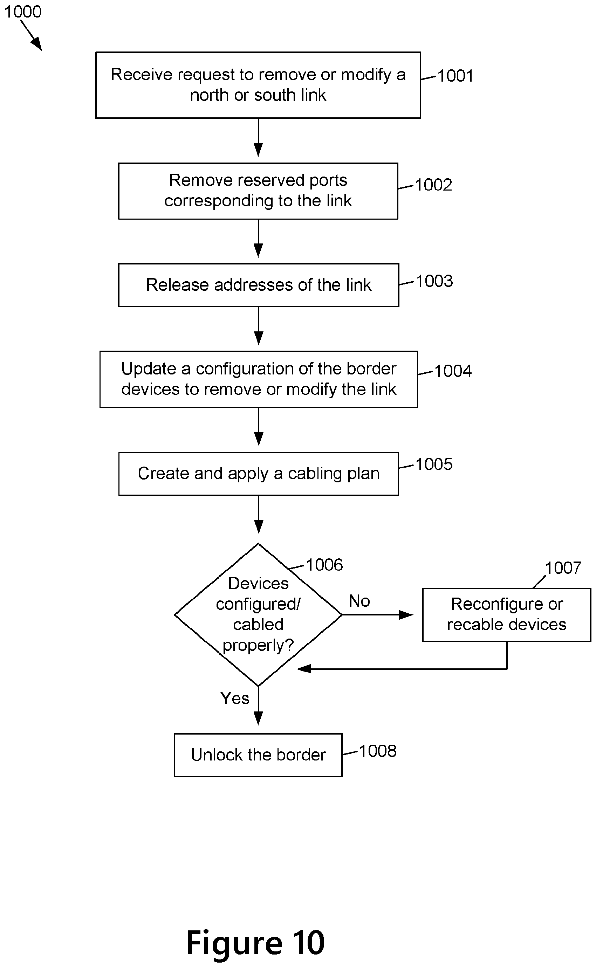

Figure 10 is a flow diagram of a method 1000 for removing a north or south link from the network border in accordance with various embodiments of the present technology. In one or more aspects, the method 1000 or one or more steps thereof may be performed by a computing system, such as the computing environment 100. In one or more aspects, the method 1000 or one or more steps thereof may be performed by the system 300 for configuring a network border. The method 1000 or one or more steps thereof may be embodied in computer-executable instructions that are stored in a computer-readable medium, such as a non-transitory mass storage device, loaded into memory and executed by a CPU. The method 1000 is exemplary, and it should be understood that some steps or portions of steps in the flow diagram may be omitted and/or changed in order.

At step 1001 a request may be received to remove or modify a north or south link of a border. The request may be received via an API, such as the API 305. The request may include an indication of the border and an indication of the link to be removed. The request may include an indication of the modification to be done to a link, such as reduce throughput, increase throughput, and/or any other modifications to be done to the link.

At step 1002 reserved ports corresponding to the link may be removed. If the link is being removed, all port reservations corresponding to the link may be removed. If the link is being modified, some or all of the ports corresponding to the link may be removed and/or additional ports may be reserved. The port reservations may be stored in a database, such as the database 310.

At step 1003 the addresses of the link may be released. If the link is being removed, all addresses of the link may be released. If the link is being modified, some or all of the addresses may be released.

At step 1004 the network devices that form the border may be reconfigured to account for the removal or modification of the link. If the link is being removed, all border devices may have their configuration updated to remove any references to the link. If the link is being modified, the configuration of the border devices may be updated to reflect the modifications to the link. The devices may be configured using the method 600, described above. The configuration for each device may be stored in a database, such as the database 310.

At step 1005 a cabling plan may be created and applied. The cabling plan may indicate which cables should be connected to which ports of which devices in order to remove or modify the link. The cabling plan may include a series of instructions indicating which cables to connect to which ports of the devices in order to remove or modify the link and/or which cables to be removed from which ports in order to remove or modify the link. The cabling plan may include instructions for using breakout cables, which are cables that have one port on one side, and multiple lower speed ports on the other side. A breakout cable may be used to connect two two-hundred gigabit ports to one four-hundred gigabit port, for example.

At step 1006 each of the devices that form the border may be analyzed to determine whether that device was properly configured and/or whether the cables were attached to that device according to the cabling plan so that the link is removed or modified. The actual configuration of the device may be compared to an intended configuration stored in a database. The cabling may be verified by sending various test packets via the cables and determining whether those test packets are received at the correct ports of the device.

If any device is determined to be configured or cabled incorrectly, the method 1000 may proceed to step 1007. At step 1007, the error in cabling or configuration may be identified and resolved. If the device is malfunctioning, a replacement device may be identified, configured, and cabled. If the error can be repaired, the device may be reconfigured or re-cabled to resolve the issue. An instruction may be output to a technician to resolve this issue. If the technician indicates that the issue cannot be resolved, a replacement device may be identified, configured, and cabled. Any changes made to the device may be stored in the database. After the issue has been resolved, the method 1000 may proceed to step 1006 where the device or devices that were found to be configured or cabled incorrectly may be analyzed to confirm whether the devices are now properly configured and/or whether the cables were attached properly.

After the devices are determined to be configured properly and cabled properly, the border may be unlocked at step 1008. If a link was being removed, then after being unlocked the border might not include the link that was removed. If a link was being modified, then after being unlocked the border might include the modified link.

### METHOD FOR ADAPTING A BORDER

After a border is deployed, the border may be adapted in order to increase or reduce a capacity of the border. The border may be deployed with a specified throughput, but over time the usage of the network may change so that more or less throughput would be desirable.

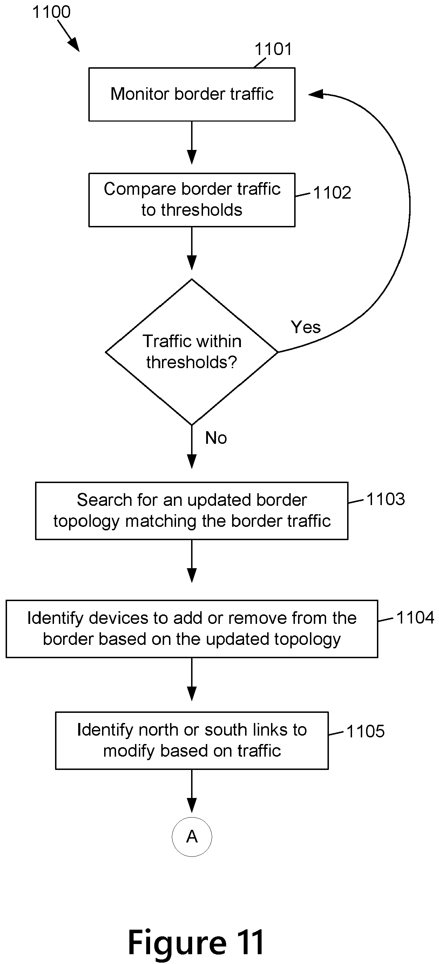

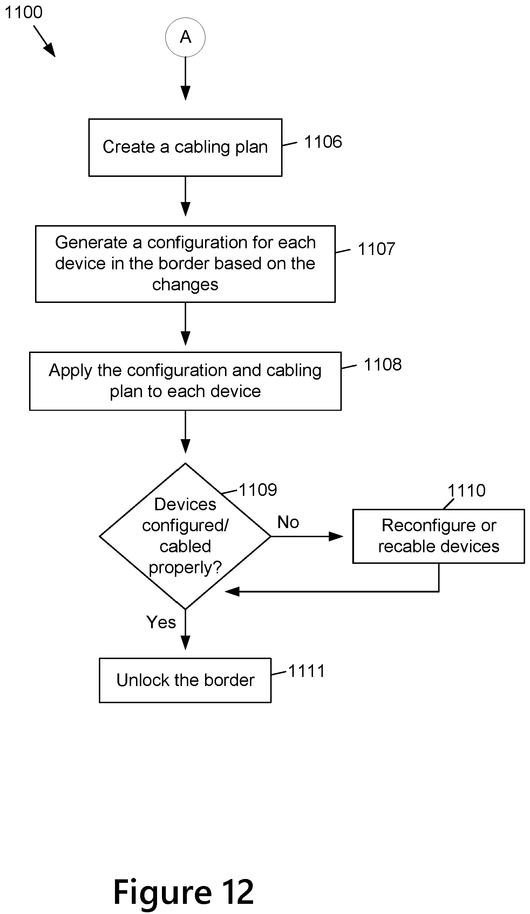

Figures 11 and 12 are a flow diagram of a method 1100 for adapting a network border in accordance with various embodiments of the present technology. In one or more aspects, the method 1100 or one or more steps thereof may be performed by a computing system, such as the computing environment 100. In one or more aspects, the method 1100 or one or more steps thereof may be performed by the system 300 for configuring a network border. The method 1100 or one or more steps thereof may be embodied in computer-executable instructions that are stored in a computer-readable medium, such as a non-transitory mass storage device, loaded into memory and executed by a CPU. The method 1100 is exemplary, and it should be understood that some steps or portions of steps in the flow diagram may be omitted and/or changed in order. The method 1100 may be executed to adapt a border after the border is deployed via the methods 400, 600, and 800.

At step 1101 traffic passing through an existing border may be monitored. The monitored traffic may include north-south traffic, which is traffic entering or exiting the network from outside of the data center of the network. The monitored traffic may include traffic within the border. The monitored traffic may include east-west traffic, which may be traffic within a data center, traffic between devices in a same cell, and/or traffic between different cells that are directly connected to each other. An average amount of traffic over a period of time, a maximum amount of traffic over the period of time, and/or any other measure of network traffic may be determined.

At step 1102 the monitored traffic may be compared to predefined thresholds for the border and/or a determined capacity of the border. The predefined thresholds may have been defined in a predefined topology of the border that was used when creating the border. If the traffic is within the thresholds, the method 1100 may return to monitoring the network traffic at step 1101. The network traffic may be periodically compared to the thresholds, such as every thirty minutes.

The thresholds may be based on a capacity of the network, such as a percentage of the capacity of the network. For example a high traffic threshold may be ninety percent of the total capacity of the network, and a low traffic threshold may be twenty five percent of the total capacity of the network. If the traffic is above the high traffic threshold, the border may be adapted to have higher capacity. If the traffic is below the low traffic threshold, the border may be adapted to have lower capacity and free up unused or underused network resources.

In addition to, or instead of monitoring the traffic of the border, the amount of upcoming traffic may be predicted based on historic data. A machine learning algorithm, such as a neural network, may be trained to predict upcoming traffic levels based on previously recorded traffic data for a network. The machine learning algorithm may then be used to predict upcoming traffic levels, and the border may be adapted based on these predicted traffic levels. The border may also be adapted based on a pre-defined schedule. The border may be adapted based on seasonal changes, holidays, global events, and/or any other schedule. For example, if a network has high traffic levels from October to December and lower traffic levels throughout the rest of the year, the border may be scheduled so that the capacity of the border is increased at the end of September, and decreased on at the start of January.

If the traffic is above or below the thresholds at step 1102, the method 1100 may proceed to step 1103 in order to adapt the border based on the monitored traffic. At step 1103 a border topology corresponding to the monitored border traffic may be identified. A database of pre-defined border topologies may be searched to identify a border topology corresponding to the traffic. If the monitored traffic is below the threshold, a border topology may be identified that has a smaller capacity than the current topology. If the monitored traffic is above the threshold, a border topology may be identified that has a greater capacity than the current topology.

After identifying the updated border topology, the existing border may be modified based on the updated topology. The devices that form the border may be modified in order to deploy the updated topology. Devices may be added or removed from the border to deploy the updated topology.

Instead of or in addition to performing steps 1101 and 1102, a request may be received to scale-up or scale-down an existing border. The request may be received via an API, such as the API 305. The request may include parameters for a modified border, such as a requested throughput or other parameters of the border. If a request is received to scale-up or scale-down the border, at step 1103 an updated border topology corresponding to the request may be identified.

At step 1104 devices to add or remove from the border may be identified. The updated topology identified at step 1103 may indicate an amount of devices for the border, types of devices for the border, capabilities of the devices for the border, and/or any other indication of devices to be used to deploy the border. Available devices corresponding to the updated topology may be identified. A database of devices may be searched to identify available devices, such as the database 310. Devices may be considered available if they are unused and/or have excess capacity that is not currently being used.

If the border is being reduced in capacity, devices that are currently being used to deploy the border, but are not needed to deploy the updated topology, may be identified. Those devices may then be removed from the border and the database may be updated to indicate that those devices are no longer part of the border and now have available capacity. The devices that are removed from the border may then be used in another border or for other purposes.

At step 1105 north or south links to modify based on the traffic may be identified. Links may be added to the border, modified, and/or removed from the border. The method 800, described above, may be used to add a link. The method 1000, described above, may be used to remove or modify a link.

Some or all of steps 1103, 1104, and 1105 may be performed and/or some of the steps may be skipped. Traffic on north or south links of the border may be monitored at step 1101. If the traffic exceeds a threshold, additional north or south links may be added to the border at step 1105. In this example, steps 1103 and 1104 may be skipped.

At step 1106 a cabling plan may be generated for adjusting the border to the updated topology. The cabling plan may indicate which cables should be connected to which port of each device that is part of the border. The cabling plan may be determined based on the updated border topology identified at step 1103 and the devices identified at step 1104 to add or remove from the border. The cabling plan may include a series of instructions indicating which cables to connect to which ports of the devices in order to deploy the updated border topology.

At step 1107 a configuration may be generated for each device in the border. A configuration may be generated for each device that forms the border in order to reflect the changes being made to the border. A configuration may be generated for devices that are remaining in the border, in order to update those devices to the updated border topology.

The configuration for each device may be generated by retrieving a current configuration of the devices from a database, such as the database 310, or from the devices themselves. The current configuration of each device may be modified to reflect the changes being made to the border. The new configuration for each device may be stored in a database, such as the database 310. The new configurations may be applied to each of the devices. The configuration may be applied by a device configurator system, such as the device configurator 320.

At step 1108 the configuration and cabling plan may be applied to the devices in the border. The configurations may be applied by a device configurator system, such as the device configurator 320. Instructions may be generated for the cabling plan. The instructions may be displayed to a technician on a user interface. After detecting that a cable has been connected according to the instructions, the instruction for that connection may be removed from the interface and/or an indication may be added to the interface to show that this connection has been completed and verified.

At step 1109 each device may be analyzed to determine whether the device was properly configured and whether the cables were attached properly. The actual configuration of the device may be compared to an intended configuration stored in a database. The cabling may be verified by sending various test packets via the cables and determine whether they are received at the correct ports of the device.

If any device is determined to be configured or cabled incorrectly, the method 1100 may proceed to step 1110. At step 1110, the error in cabling or configuration may be identified and resolved. The device that is cabled or configured incorrectly may be identified. If the device is malfunctioning, a replacement device may be identified, configured, and/or cabled. If the error can be repaired, the device may be reconfigured or re-cabled to resolve the issue. An instruction may be output to a technician to resolve this issue. If the technician indicates that the issue cannot be resolved, a replacement device may be identified, configured, and cabled. Any changes made to the devices may be stored in the database. After the issue has been resolved, the method 1100 may proceed to step 1109 where each device that forms the border may be analyzed again to determine whether the device was properly configured and whether the cables were attached properly.

After the devices are determined to be configured properly, the border may be unlocked at step 1111. After the border is unlocked, the border may be ready to accept client traffic and used to route packets according to the updated topology and/or updated links. The method 1100 may then return to step 1101 where the traffic is monitored. In this manner, the border may continuously be monitored to determine whether the capacity of the border is to be increased, decreased, or maintained.

While some of the above-described implementations may have been described and shown with reference to particular acts performed in a particular order, it will be understood that these acts may be combined, sub-divided, or re-ordered without departing from the teachings of the present technology. At least some of the acts may be executed in parallel or in series. Accordingly, the order and grouping of the act is not a limitation of the present technology.

It should be expressly understood that not all technical effects mentioned herein need be enjoyed in each and every embodiment of the present technology.

As used herein, the wording "and/or" is intended to represent an inclusive-or; for example, "X and/or Y" is intended to mean X or Y or both. As a further example, "X, Y, and/or Z" is intended to mean X or Y or Z or any combination thereof.

The foregoing description is intended to be exemplary rather than limiting. Modifications and improvements to the above-described implementations of the present technology may be apparent to those skilled in the art.

## Claims

1. A method for configuring a border of a network, the method comprising:
receiving (401) a request to create the border, wherein the request comprises a size of the border and a location of the border;
searching (405) a plurality of border topologies for a border topology most closely matching the request;
creating (406) the border with a locked state;
reserving (407, 408, 409) address ranges for the border; and
outputting (410) a topology of the border.

2. The method of claim 1, further comprising:
receiving (601) a request indicating a device to configure for the border;
reserving (605) addresses for the device, wherein the addresses are within the address ranges;
generating (606) a configuration for the device;
creating (607) a cabling plan for the device;
applying (609) the configuration to the device; and
de-isolating (612) the device.

3. The method of claim 2, further comprising, after applying the configuration to the device, confirming that the device has been configured according to the configuration.

4. The method of claim 2 or claim 3, further comprising:
validating (602) the request indicating the device to configure for the border; and
if the request fails the validation, outputting an indication that the request has failed validation.

5. The method of any one of claims 1 to 4, further comprising:
receiving (801) a request to add a north link to the border, wherein the request comprises a target throughput;
reserving (802) available ports until the target throughput is reached;
reserving (804) addresses for the north link, wherein the addresses are within the address ranges;
creating (805) a cabling plan for the north link;
updating (806) a configuration of devices forming the border to include the north link; and
unlocking (810) the border after the cabling plan has been applied and the devices have been reconfigured to include the north link, wherein the border accepts client traffic after being unlocked.

6. The method of any one of claims 1 to 5, further comprising:
receiving (801) a request to add a south link to the border, wherein the request comprises a target throughput;
reserving (802) available ports until the target throughput is reached;
reserving (804) addresses for the south link, wherein the addresses are within the address ranges;
creating (805) a cabling plan for the south link;
updating (806) a configuration of devices forming the border to include the south link; and
unlocking (810) the border after the cabling plan has been applied and the devices have been reconfigured to include the south link, wherein the border accepts client traffic after being unlocked.

7. The method of any one of claims 1 to 6, further comprising:
validating (402) the request to create the border; and
if the request fails the validation, outputting an indication that the request has failed validation.

8. The method of any one of claims 1 to 7, wherein reserving the address ranges for the border comprises:
reserving (407) internal link address ranges;
reserving (408) loopback parent address ranges; and
reserving (409) south parent address ranges.

9. The method of any one of claims 1 to 8, wherein the topology indicates what type of devices are to be used to implement the border, and an amount of each type of device.

10. The method of any one of claims 1 to 9, further comprising outputting a user interface corresponding to the cabling plan.

11. The method of claim 10, further comprising, after detecting that a cable has been connected according to the cabling plan, updating the user interface to remove the instruction corresponding to that cable.

12. The method of any one of claims 1 to 11, further comprising:
monitoring (1101) traffic on north links of the border;
comparing (1102) the traffic to a threshold volume of traffic; and
after determining that the traffic is above the threshold, adding a north link to the border.

13. The method of any one of claims 1 to 12, further comprising:
monitoring (1101) traffic on south links of the border;
comparing (1102) the traffic to a threshold volume of traffic; and
after determining that the traffic is above the threshold, adding a south link to the border.

14. A computer-implemented system configured to perform the method of any one of claims 1 to 13.

15. A non-transitory computer-readable medium comprising computer-executable instructions that cause a system to execute the method according to any one of claims 1 to 13.

## Amended claims

### Amended claims in accordance with Rule 137(2) EPC.

1. A method for configuring a border of a network, the method comprising:
receiving (401) a request to create the border, wherein the request comprises a size of the border, a location of the border, and a set of attributes comprising at least one of a minimum connectivity for the border, a minimum throughput for the border, and a minimum amount of ports for the border;
searching (405) a plurality of predefined border topologies and identifying a border topology with a set of attributes most closely matching the set of attributes in the request;
creating (406) the border with a locked state;
reserving (407, 408, 409) address ranges for the created border; and
outputting (410) the identified border topology of the created border.

2. The method of claim 1, further comprising:
receiving (601) a request indicating a device to configure for the created border;
reserving (605) addresses for the device, wherein the addresses are within the address ranges;
generating (606) a configuration for the device;
creating (607) a cabling plan for the device;
applying (609) the configuration to the device; and
de-isolating (612) the device.

3. The method of claim 2, further comprising, after applying the configuration to the device, confirming that the device has been configured according to the configuration.

4. The method of claim 2 or claim 3, further comprising:
validating (602) the request indicating the device to configure for the created border; and
if the request fails the validation, outputting an indication that the request has failed validation.

5. The method of any one of claims 1 to 4, further comprising:
receiving (801) a request to add a north link to the created border, wherein the request comprises a target throughput;
reserving (802) available ports until the target throughput is reached;
reserving (804) addresses for the north link, wherein the addresses are within the address ranges;
creating (805) a cabling plan for the north link;
updating (806) a configuration of devices forming the created border to include the north link; and
unlocking (810) the created border after the cabling plan has been applied and the devices have been reconfigured to include the north link, wherein the created border accepts client traffic after being unlocked.

6. The method of any one of claims 1 to 5, further comprising:
receiving (801) a request to add a south link to the created border, wherein the request comprises a target throughput;
reserving (802) available ports until the target throughput is reached;
reserving (804) addresses for the south link, wherein the addresses are within the address ranges;
creating (805) a cabling plan for the south link;
updating (806) a configuration of devices forming the created border to include the south link; and
unlocking (810) the created border after the cabling plan has been applied and the devices have been reconfigured to include the south link, wherein the created border accepts client traffic after being unlocked.

7. The method of any one of claims 1 to 6, further comprising:
validating (402) the request to create the border; and
if the request fails the validation, outputting an indication that the request has failed validation.

8. The method of any one of claims 1 to 7, wherein reserving the address ranges for the created border comprises:
reserving (407) internal link address ranges;
reserving (408) loopback parent address ranges; and
reserving (409) south parent address ranges.

9. The method of any one of claims 1 to 8, wherein the topology indicates what type of devices are to be used to implement the created border, and an amount of each type of device.

10. The method of any one of claims 1 to 9, further comprising outputting a user interface corresponding to the cabling plan.

11. The method of claim 10, further comprising, after detecting that a cable has been connected according to the cabling plan, updating the user interface to remove the instruction corresponding to that cable.

12. The method of any one of claims 1 to 11, further comprising:
monitoring (1101) traffic on north links of the created border;
comparing (1102) the traffic to a threshold volume of traffic; and
after determining that the traffic is above the threshold, adding a north link to the created border.

13. The method of any one of claims 1 to 12, further comprising:
monitoring (1101) traffic on south links of the created border;
comparing (1102) the traffic to a threshold volume of traffic; and
after determining that the traffic is above the threshold, adding a south link to the created border.

14. A computer-implemented system configured to perform the method of any one of claims 1 to 13.

15. A non-transitory computer-readable medium comprising computer-executable instructions that cause a system to execute the method according to any one of claims 1 to 13.
